# DEMANDE DE BREVET EUROPEEN

(11) **EP 4 717 601 A1**
(43) Date de publication de la demande: **01.04.2026**
(21) Numéro de dépôt: 25202319.7
(22) Date de dépôt: 15.09.2025
(51) Int. Cl.: B64D 27/18, B64D 27/40

(54) **ENSEMBLE DE PROPULSION D AÉRONEF COMPRENANT UNE STRUCTURE PORTEUSE RELIANT UNE MOTORISATION ET UNE STRUCTURE PRIMAIRE D'UN MÂT ET SUPPORTANT AU MOINS UN ACCESSOIRE**

(30) Priorité: 30.09.2024 FR 2410480
(71) Demandeur: AIRBUS OPERATIONS (S.A.S.), 31060 Toulouse (FR)
(72) Inventeur: LANSIAUX, Rémi, 31060 TOULOUSE (FR); CHARTON, Nicolas, 31060 TOULOUSE (FR); VIGNES, Jean-Baptiste, 31060 TOULOUSE (FR); VINOT, Julien, 31060 TOULOUSE (FR); CARCENAC, Xavier, 31060 TOULOUSE (FR); BENNAIEM, Mohammed-Amine, 31060 TOULOUSE (FR)
(74) Mandataire: Fantin, Laurent

(57) **Abrégé**

L'invention a pour objet un ensemble de propulsion (30) d'aéronef comprenant :
- une motorisation (32) qui comporte des parties avant et arrière décalées selon un axe longitudinal (X),
- une structure primaire (42) de mât (34),
- au moins une structure porteuse (48) qui s'étend selon un axe parallèle à l'axe longitudinal (X), reliée à la partie avant de la motorisation (32), supportant au moins un accessoire (66),
- un système d'attache-moteur (46) qui comporte :
∘ au moins une attache avant (46.1) reliant directement la motorisation (32) et la structure primaire (42) ;
∘ au moins une attache arrière (46.2), décalée vers l'arrière par rapport à l'attache avant (46.1), reliant la structure primaire (42) et la structure porteuse (48).

Cette solution permet d'optimiser la répartition des masses.

L'invention a également pour objet un aéronef comprenant au moins un tel ensemble de propulsion.

## Description

La présente demande se rapporte à un ensemble de propulsion d'aéronef comprenant une structure porteuse qui relie une motorisation et une structure primaire d'un mât et supporte au moins un accessoire ainsi qu'à un aéronef comportant au moins un tel ensemble de propulsion.

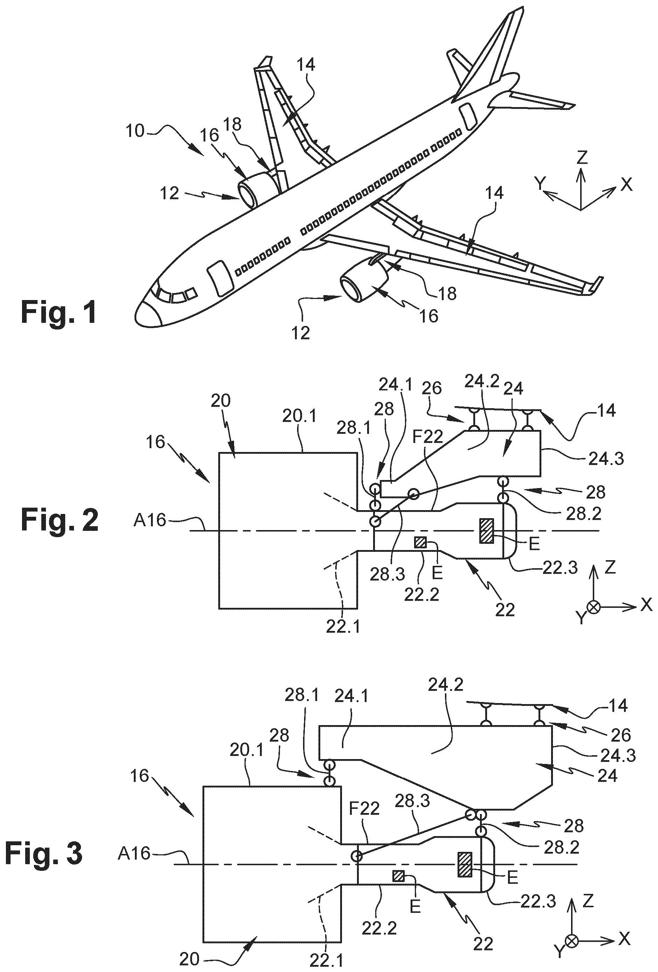

Selon une configuration visible sur les figures 1 à 3, un aéronef 10 comprend plusieurs ensembles de propulsion 12 qui sont positionnés sous la voilure 14 de l'aéronef 10.

Un ensemble de propulsion 12 comprend une motorisation 16, une nacelle (non représentée sur les figures 2 et 3) positionnée autour de la motorisation 16 ainsi qu'un mât 18 reliant la motorisation 16 au reste de l'aéronef 10, notamment à la voilure 14.

Pour la suite de la description, une direction longitudinale X est parallèle à l'axe de rotation A16 de la motorisation 16. Un plan transversal est un plan perpendiculaire à l'axe de rotation A16 de la motorisation 16. Un plan longitudinal est un plan passant par l'axe de rotation A16 de la motorisation 16. Une direction transversale et horizontale Y est une direction perpendiculaire à l'axe de rotation A16 de la motorisation 16 et horizontale. Une direction transversale et verticale Z est une direction perpendiculaire à l'axe de rotation A16 de la motorisation 16 et verticale. Un plan médian vertical PMV est un plan vertical contenant l'axe de rotation A16 de la motorisation 16. Les termes avant et arrière font référence au sens d'écoulement du flux d'air dans la motorisation 16, ce dernier s'écoulant de l'avant vers l'arrière.

La motorisation 16 comprend une soufflante 20 qui comporte un carter de soufflante 20.1 ainsi qu'un cœur de réacteur 22 qui comporte une partie avant 22.1 positionnée à l'intérieur de la soufflante 20, une partie centrale 22.2 ainsi qu'une partie arrière 22.3 intégrant notamment une tuyère. Selon une configuration, la partie centrale 22.2 présente une section transversale inférieure à celles des parties avant et arrière 22.1, 22.3. Le cœur de réacteur 22 présente une enveloppe extérieure appelée carter de motorisation F22.

Le mât 18 comprend une structure primaire 24, sous la forme d'un caisson, qui est reliée à la voilure 14 par un système d'attache-voilure 26 et à la motorisation 16 par un système d'attache-moteur 28. Cette structure primaire 24 comprend une extrémité avant 24.1, une partie médiane 24.2 et une extrémité arrière 24.3.

Selon un premier mode de réalisation visible sur la figure 2, le système d'attache moteur 28 comprend une attache avant 28.1 reliant l'extrémité avant 24.1 de la structure primaire 24 et la partie avant et/ou centrale 22.1, 22.2 du cœur de réacteur 22, une attache arrière 28.2 reliant l'extrémité arrière 24.3 et/ou la partie médiane 24.2 de la structure primaire 24 et la partie arrière 22.3 du cœur de réacteur 22 ainsi que deux bielles 28.3, positionnées de manière symétrique par rapport au plan médian vertical de la motorisation 16, reliant la structure primaire 24 et la partie avant et/ou centrale 22.1, 22.2 du cœur de réacteur 22.

Selon un deuxième mode de réalisation visible sur la figure 3, le système d'attache moteur 28 comprend une attache avant 28.1 reliant l'extrémité avant 24.1 de la structure primaire 24 et le carter de soufflante 20.1 de la soufflante 20, une attache arrière 28.2 reliant l'extrémité arrière 24.3 et/ou la partie médiane 24.2 de la structure primaire 24 et la partie arrière 22.3 du cœur de réacteur 22 ainsi que deux bielles 28.3, positionnées de manière symétrique par rapport au plan médian vertical de la motorisation 16, reliant la structure primaire 24 et la partie avant et/ou centrale 22.1, 22.2 du cœur de réacteur 22.

Quel que soit le mode de réalisation, le système d'attache-moteur 28 comprend, pour chacune des première, deuxième et troisième attaches 28.1, 28.2, 28.3, au moins un point d'ancrage situé sur la motorisation 16, certains de ces points d'ancrage étant décalés selon la direction longitudinale sur le carter de motorisation F22.

Comme illustré sur les figures 2 et 3, le carter de motorisation F22 supporte de nombreux accessoires E qui augmentent le poids de l'ensemble formé par le cœur de réacteur 40 et les accessoires E supportés par le cœur de réacteur 40.

Cette configuration n'est pas optimale en matière de répartition des masses.

La présente invention vise à remédier à tout ou partie des inconvénients de l'art antérieur. A cet effet, l'invention a pour objet un ensemble de propulsion d'aéronef comprenant :
- une motorisation qui s'étend d'avant en arrière selon un axe longitudinal et comprend, à l'avant, une partie avant et, à l'arrière de la partie avant, une partie arrière, les parties avant et arrière ayant chacune une forme circonférentielle, la partie avant ayant une section supérieure à celle de la partie arrière,
- une nacelle positionnée autour de la motorisation,
- une structure primaire de mât,
- au moins un accessoire,
- un système d'attache-moteur, reliant la structure primaire et la motorisation, qui comporte au moins une attache avant reliant directement la partie avant de la motorisation et la structure primaire.

Selon l'invention, l'ensemble de propulsion comprend au moins une structure porteuse tubulaire qui s'étend selon un axe parallèle à l'axe longitudinal entre la nacelle et la partie arrière de la motorisation, tout autour de la partie arrière de la motorisation, la structure porteuse étant reliée à la partie avant de la motorisation. En complément, le système d'attache-moteur comprend au moins une attache arrière, décalée vers l'arrière par rapport à l'attache avant, reliant la structure primaire et la structure porteuse, l'accessoire étant relié à la structure porteuse.

Cette solution permet d'optimiser la répartition des masses en fixant l'accessoire sur une structure distincte de la motorisation.

Selon une autre caractéristique, l'ensemble de propulsion comprend au moins une liaison assurant un transfert d'énergie mécanique, électrique ou fluidique entre ledit au moins un accessoire et la motorisation, et comprenant des premier et deuxième tronçons reliés respectivement au dit au moins un accessoire et à la motorisation ainsi qu'au moins une connectique configurée pour connecter et déconnecter les premier et deuxième tronçons. Selon une autre caractéristique, l'attache avant et la structure porteuse sont reliées à la motorisation au niveau approximativement d'un même plan transversal d'attache.

Selon une autre caractéristique, la structure porteuse est une structure en treillis qui comprend des renforts longilignes délimitant des mailles.

Selon une autre caractéristique, la structure porteuse s'étend entre des extrémités avant et arrière, l'extrémité avant étant reliée à la motorisation, la structure porteuse en treillis comprenant au moins un renfort transversal situé au niveau de l'extrémité arrière.

Selon une autre caractéristique, au moins un renfort transversal s'étend sur toute la circonférence de la partie arrière de la motorisation de manière à former un anneau.

Selon une autre caractéristique, l'attache arrière comprend :
- une poutre transversale solidaire de la structure primaire,
- au moins une première manille à deux points, positionnée d'un premier côté d'un plan médian vertical, reliée à la poutre transversale par un premier axe de pivotement et à la structure porteuse par un deuxième axe de pivotement,
- au moins une deuxième manille à trois points, positionnée d'un deuxième côté du plan médian vertical, reliée à la poutre transversale par des troisième et quatrième axes de pivotement et à la structure porteuse par un cinquième axe de pivotement.

Selon une autre caractéristique, le système d'attache-moteur comprend au moins une liaison de sécurité de type fail-safe, reliant la structure primaire et la structure porteuse ou la partie arrière de la motorisation, configurée pour ne pas former un chemin d'efforts lorsque l'attache arrière est opérationnelle et former un chemin d'efforts en cas d'endommagement de l'attache arrière.

Selon une première configuration, les parties avant et arrière de la motorisation sont respectivement un carter de soufflante d'une soufflante carénée et un cœur de réacteur. Selon une deuxième configuration, les parties avant et arrière de la motorisation sont respectivement une structure support sur laquelle est rapportée une soufflante ou une hélice non carénée et un cœur de réacteur.

L'invention a également pour objet un aéronef comprenant au moins un ensemble de propulsion selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef,
- La figure 2 est une représentation schématique latérale d'un ensemble de propulsion d'aéronef (sans nacelle) illustrant un premier mode de réalisation de l'art antérieur,
- La figure 3 est une représentation schématique latérale d'un ensemble de propulsion d'aéronef (sans nacelle) illustrant un deuxième mode de réalisation de l'art antérieur,
- La figure 4 est une représentation schématique latérale d'un ensemble de propulsion d'aéronef (sans nacelle) illustrant un mode de réalisation de l'invention,
- La figure 5 est une coupe schématique transversale d'un ensemble de propulsion d'aéronef illustrant un mode de réalisation de l'invention,
- La figure 6 est une coupe schématique transversale d'un ensemble de propulsion d'aéronef illustrant un autre mode de réalisation de l'invention,
- La figure 7 est une représentation schématique latérale d'un ensemble de propulsion d'aéronef (sans nacelle) illustrant un mode de réalisation de l'invention,
- La figure 8 est une représentation schématique en perspective depuis l'arrière de l'ensemble de propulsion (sans nacelle) visible sur la figure 7,
- La figure 9 est vue de face d'une attache arrière illustrant un mode de réalisation de l'invention,
- La figure 10 est une représentation schématique latérale d'un ensemble de propulsion d'aéronef comprenant une structure porteuse en treillis illustrant un mode de réalisation de l'invention,
- La figure 11 est une représentation schématique latérale d'un ensemble de propulsion d'aéronef comprenant une structure porteuse en treillis illustrant un autre mode de réalisation de l'invention.

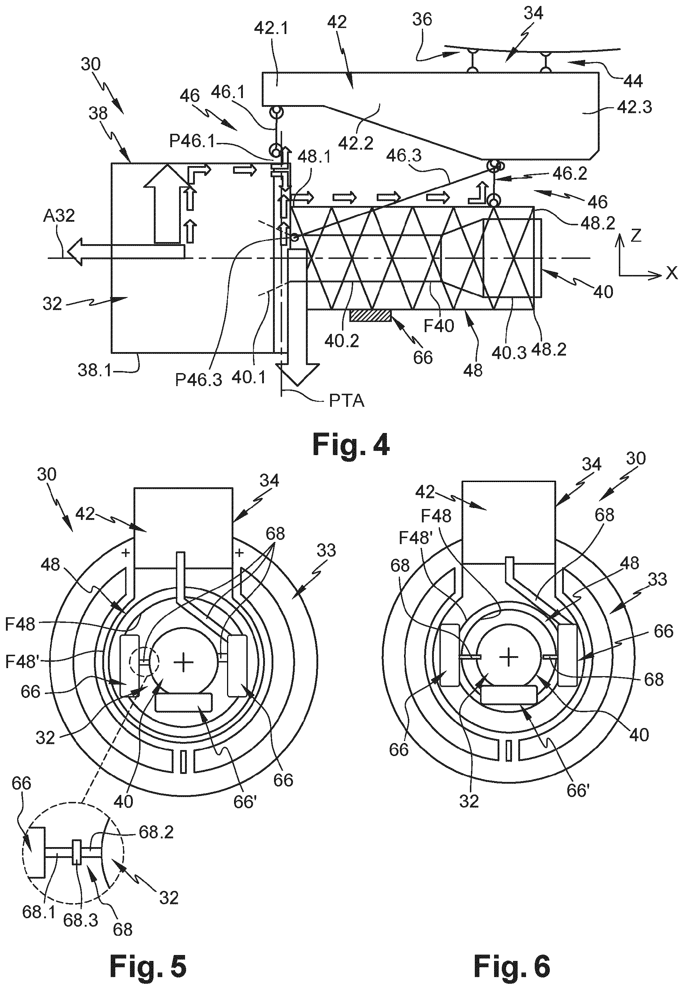

Selon un mode de réalisation visible sur les figures 3 à 8, 10 et 11, un ensemble de propulsion 30 comprend une motorisation 32 présentant un axe de rotation A32, une nacelle 33 (visible sur les figures 5 et 6) positionnée autour de la motorisation 32 ainsi qu'un mât 34 configuré pour relier l'ensemble de propulsion 30, et plus particulièrement la motorisation 32, à une voilure 36 d'un aéronef. Ce dernier comprend au moins un tel ensemble de propulsion 30. Selon une configuration, la motorisation 32 comprend une soufflante 38 ainsi qu'un cœur de réacteur 40.

La soufflante 38 comporte un carter de soufflante 38.1. Le cœur de réacteur 40 comporte, de l'avant vers l'arrière, une partie avant 40.1 positionnée à l'intérieur de la soufflante 38, une partie centrale 40.2 ainsi qu'une partie arrière 40.3 intégrant notamment des turbines haute et basse pression et une tuyère. Selon une configuration, la partie centrale 40.2 présente une section transversale inférieure à celles des parties avant et arrière 40.1, 40.3. Le cœur de réacteur 40 présente une enveloppe extérieure appelée carter de motorisation F40, visible notamment sur la figure 4. A l'arrière de la soufflante 38, la nacelle 33 et le cœur de réacteur 40 délimite un conduit annulaire canalisant un flux d'air secondaire en fonctionnement.

Le mât 34 comprend une structure primaire 42, sous la forme d'un caisson, qui est reliée à la voilure 36 par un système d'attache-voilure 44 et à la motorisation 32 par un système d'attache-moteur 46. Cette structure primaire 42 comprend une extrémité avant 42.1, une partie médiane 42.2 et une extrémité arrière 42.3.

Le système d'attache-moteur 46 comprend au moins une attache avant 46.1 reliant directement la structure primaire 42 du mât et la motorisation 32 (la soufflante 38 et/ou la partie avant 40.1 du cœur de réacteur 40). Selon un mode de réalisation privilégié, l'attache avant 46.1 relie le carter de soufflante 38.1 de la soufflante 38 et l'extrémité avant 42.1 de la structure primaire 42. Cette attache avant 46.1 est configurée pour reprendre des efforts de poussée. Selon une configuration, l'attache avant 46.1 est identique à celle de l'art antérieur. Selon une particularité de l'invention, l'ensemble de propulsion 30 comprend au moins une structure porteuse 48 qui s'étend entre des extrémités avant et arrière 48.1, 48.2 orientées selon un axe parallèle à la direction longitudinale, entre la nacelle et le cœur de réacteur 40, l'extrémité avant 48.1 étant reliée à la motorisation 32. Selon un mode de réalisation privilégié, la structure porteuse 48, plus particulièrement son extrémité avant 48.1, est reliée à la soufflante 38 et plus particulièrement au carter de soufflante 38.1.

Le système d'attache-moteur 46 comprend au moins une attache arrière 46.2, décalée vers l'arrière par rapport à l'attache avant 46.1, reliant la structure primaire 42 et la structure porteuse 48. Selon un agencement, l'attache arrière 46.2 relie la partie médiane 42.2 et/ou l'extrémité arrière 42.3 de la structure primaire 42 et l'extrémité arrière 48.2 de la structure porteuse 48 ou une zone située à proximité de cette extrémité arrière 48.2.

Selon un mode de réalisation, le système d'attache-moteur 46 comprend deux bielles 46.3, positionnées de manière symétrique par rapport à un plan médian vertical PMV de la motorisation 32, reliant la structure primaire 42 et la partie avant et/ou centrale 40.1, 40.2 du cœur de réacteur 40.

Selon un agencement, l'attache avant 46.1 et les bielles 46.3 sont reliées à la motorisation 32 en des points d'ancrage P46.1, P46.3 positionnés approximativement dans un même plan transversal d'attache PTA.

Selon un mode de réalisation, le système d'attache-moteur 46 comprend au moins une attache avant 46.1 reliant directement la motorisation 32 et la structure primaire 42, ladite attache avant 46.1 étant reliée à la motorisation 32 au niveau d'un plan transversal d'attache PTA. La structure porteuse 48 est également reliée à la motorisation 32 approximativement au niveau du plan transversal d'attache PTA.

La structure porteuse 48 est espacée, sur au moins une partie de la circonférence de la motorisation 32 et de préférence sur toute la circonférence, du cœur de réacteur 40 et positionnée entre le cœur de réacteur 40 et la nacelle 33.

Selon un mode de réalisation, la structure porteuse 48 est une poutre qui ne s'étend pas autour du cœur de réacteur 40.

Selon un autre mode de réalisation, la structure porteuse 48 s'étend sur au moins une partie de la circonférence du cœur de réacteur 40. La structure porteuse 48 est tubulaire et s'étend tout autour du cœur de réacteur 40. Selon ce mode de réalisation, comme illustré sur les figures 5 et 6, la structure porteuse 48 comprend une face intérieure F48 orientée vers le cœur de réacteur 40 et une face extérieure F48' orientée vers la nacelle 33.

Selon un premier mode de réalisation visible sur la figure 4, la structure porteuse 48 est cylindrique.

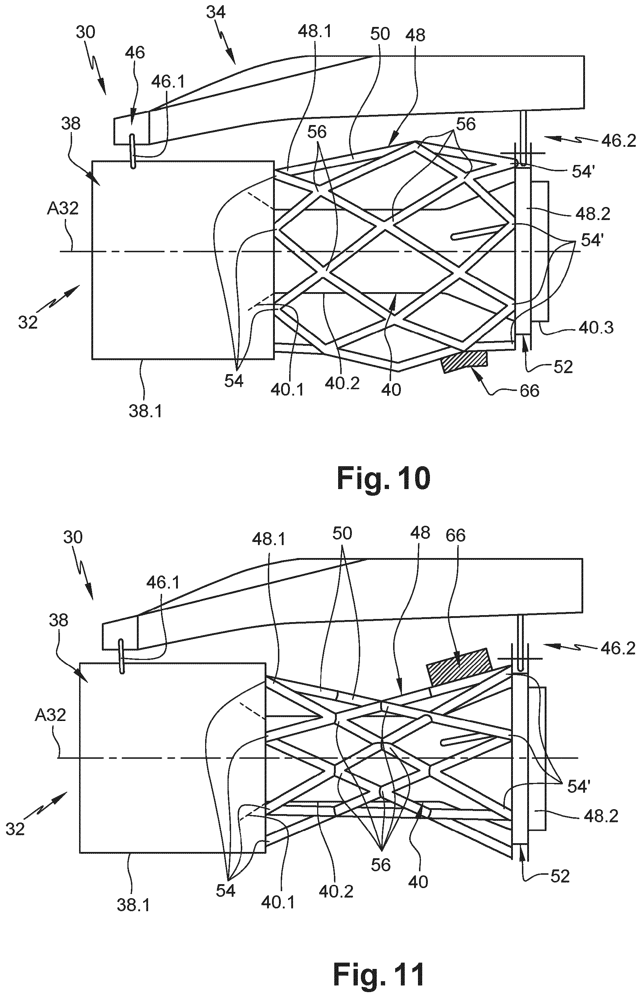

Selon un autre mode de réalisation visible sur la figure 10, la structure porteuse 48 présente une forme en tonneau.

Selon un autre mode de réalisation visible sur la figure 11, la structure porteuse 48 présente une forme hyperboloïde.

Bien entendu, l'invention n'est pas limitée à ces géométries pour la structure porteuse 48. Selon une configuration visible sur la figure 5, dans au moins un plan transversal, la structure porteuse 48 est plus proche de la nacelle 33 que du cœur de réacteur 40.

Selon une autre configuration visible sur la figure 6, dans au moins un plan transversal, la structure porteuse 48 est plus proche du cœur de réacteur 40 que de la nacelle 33.

Selon un mode de réalisation visible notamment sur les figures 10 et 11, la structure porteuse 48 est une structure ajourée distincte de la structure primaire 42 du mât et de l'enveloppe extérieure F40 du cœur de réacteur 40. Cette structure ajourée présente un taux d'ouvert (correspondant au ratio de la somme des surfaces ouvertes sur la surface totale) d'au moins 50%. De plus, contrairement à l'enveloppe extérieure F40 du cœur de réacteur 40, elle présente une rigidité suffisante pour former un chemin d'efforts entre la motorisation 32 et la structure primaire 42. Selon un configuration, la structure ajourée est une structure en treillis qui comprend plusieurs renforts longilignes 50 ainsi qu'au moins un renfort transversal 52. La structure porteuse 48 en treillis peut comprendre au moins un renfort longitudinal qui s'étend de son extrémité avant 48.1 jusqu'à son extrémité arrière 48.2.

Selon une configuration, chaque renfort longiligne 50 est rectiligne et présente une section circulaire. Bien entendu, l'invention n'est pas limitée à cette section pour les renforts longilignes 50.

Certains renforts longilignes 50 sont directement reliés à la motorisation 32 chacun par un système de liaison 54 comprenant par exemple au moins un élément parmi une broche, un rivet, un boulon ou tout autre élément de liaison.

Certains renforts longilignes 50 sont directement reliés à un renfort transversal 52 chacun par un système de liaison 54' comprenant par exemple au moins un élément parmi une broche, un rivet, un boulon ou tout autre élément de liaison.

Selon un mode de réalisation visible par exemple sur les figures 10 et 11, la structure porteuse 48 en treillis comprend un unique renfort transversal 52 arrière situé au niveau de son extrémité arrière 48.2.

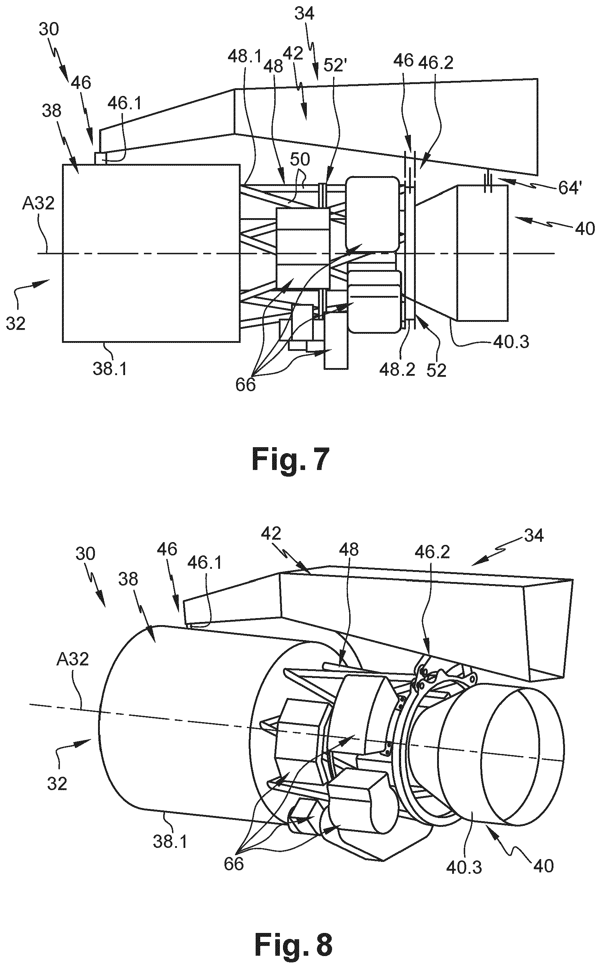

Selon un autre mode de réalisation visible sur la figure 7, la structure porteuse 48 en treillis comprend un renfort transversal 52 arrière, situé au niveau de l'extrémité arrière 48.2, ainsi qu'au moins un renfort transversal 52' intermédiaire situé entre les extrémités avant et arrière 48.1, 48.2 de la structure porteuse 48 en treillis.

La structure porteuse 48 en treillis pourrait comprendre un renfort transversal avant situé au niveau de l'extrémité avant 48.1 de la structure porteuse 48 en treillis et directement relié à la motorisation.

Selon des modes de réalisation visibles sur les figures 10 et 11, les renforts longilignes 50 sont reliés entre eux au niveau de nœuds 56 de manière à former des mailles quadrilatères ou triangulaires. Selon ces modes de réalisation, les renforts longilignes 50 reliés au renfort transversal 52 ou à la motorisation 32 forment avec ces derniers des mailles triangulaires.

Selon un autre mode de réalisation visible sur la figure 7, les renforts longilignes 50, les renforts transversaux 52, 52' et la motorisation 32 sont reliés entre eux de manière à former des mailles triangulaires.

Bien entendu, l'invention n'est pas limitée à ces géométries pour les mailles. Généralement, la structure longitudinale ajourée 48 en treillis comprend des renforts longilignes 50 et/ou au moins un renfort transversal 52 reliés entre eux de manière à former des mailles quadrilatères ou triangulaires afin d'obtenir une structure ajourée.

Les renforts longitudinaux et transversaux 50, 52, 52' peuvent être métalliques et/ou en matériau composite.

Selon un mode de réalisation, au moins un renfort transversal 52, 52' comprend au moins une plaque positionnée dans un plan transversal. Selon un agencement, au moins un renfort transversal 52 comprend deux plaques parallèles entre elles, faiblement espacées et reliées entre elles.

Selon une configuration, au moins un renfort transversal 52, 52' s'étend de manière continue sur toute la circonférence du cœur de réacteur 40 et forme un anneau. Selon une autre configuration, au moins un renfort transversal 52, 52' forme un U qui présente des extrémités orientées vers la structure primaire 42.

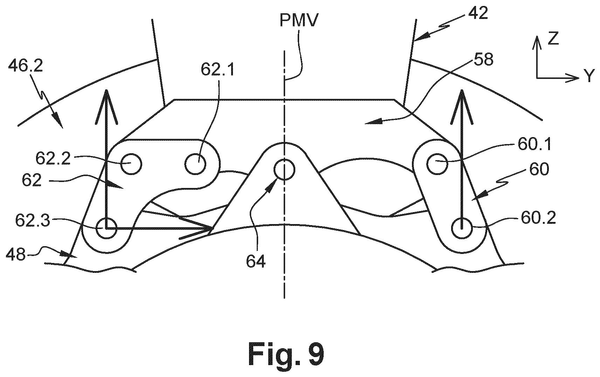

Selon un mode de réalisation visible en détails sur la figure 9, l'attache arrière 46.2 reliant la structure porteuse 48 et la structure primaire 42 est configurée pour reprendre des efforts selon des directions transversales horizontale et verticale Y, Z ainsi qu'un couple autour de l'axe de rotation A32 de la motorisation 32. Elle comprend :
- une poutre transversale 58 solidaire de la structure primaire 42,
- au moins une première manille à deux points 60, positionnée d'un premier côté du plan médian vertical PMV, reliée à la poutre transversale 58 par un premier axe de pivotement 60.1 et à la structure porteuse 48 par un deuxième axe de pivotement 60.2,
- au moins une deuxième manille à trois points 62, positionnée d'un deuxième côté du plan médian vertical PMV, reliée à la poutre transversale 58 par des troisième et quatrième axes de pivotement 62.1, 62.2 et à la structure porteuse 48 par un cinquième axe de pivotement 62.3.

Les différents axes de pivotement 60.1, 60.2, 62.1, 62.2, 62.3 sont sensiblement parallèles entre eux et à la direction longitudinale X.

Selon ce mode de réalisation, la première manille à deux points 60 est configurée pour assurer un transfert des efforts selon un axe sensiblement vertical. En complément, la deuxième manille à trois points 62 est configurée pour assurer un transfert des efforts selon les directions transversales horizontale et verticale Y, Z. Les première et deuxième manilles 60, 62 permettent de reprendre les efforts de torsion selon la direction longitudinale X.

Selon un mode de réalisation, le système d'attache-moteur 46 comprend au moins une liaison de sécurité de type fail-safe 64, 64' reliant la structure primaire 42 et la structure porteuse 48 ou la motorisation 32, notamment le cœur de réacteur 40, configurée pour ne pas former un chemin d'efforts lorsque l'attache arrière 46.2 est opérationnelle et fonctionne correctement et former un chemin d'efforts en cas d'endommagement de l'attache arrière 46.2.

Selon un agencement visible sur la figure 9, la liaison de sécurité de type fail-safe 64 relie la poutre transversale 58 et la structure porteuse 48, notamment l'extrémité arrière 48.2 de la structure porteuse 48.

L'ensemble de propulsion 30 comprend au moins un accessoire 66 nécessaire au bon fonctionnement de la motorisation 32. L'accessoire 66 est choisi parmi une liste d'accessoires non exhaustive comprenant des échangeurs, des pompes, des capteurs ou des dispositifs de régulation électrique ou hydraulique, ...

L'ensemble de propulsion 30 comprend pour au moins un accessoire 66, en fonction de sa nature, au moins une liaison 68 assurant un transfert d'énergie mécanique, électrique ou fluidique entre l'accessoire 66 et la motorisation 32 et/ou à un élément positionné dans le mât 34, la voilure 36 ou le fuselage de l'aéronef. Selon une configuration, la liaison énergétique et/ou informationnelle 68 comprend des premier et deuxième tronçons 68.1, 68.2 reliés respectivement à l'accessoire 66 et à la motorisation 32 ainsi qu'au moins une connectique 68.3 configurée pour connecter et déconnecter les premier et deuxième tronçons 68.1, 68.2.

Selon une particularité de l'invention, au moins un accessoire 66 est relié à la structure porteuse 48 dans l'espace entre la nacelle 33 et le cœur de réacteur 40.

Selon un agencement visible sur les figures 5, l'accessoire 66 est positionné contre la face intérieure F48. Selon un autre agencement visible sur la figure 6, l'équipent moteur 66 est positionné contre la face extérieure F48'.

Selon un mode de réalisation, l'ensemble de propulsion 30 comprend plusieurs accessoires 66 reliés à la structure porteuse 48 et positionnés sur la face intérieure F48 et/ou sur la face extérieure F48'.

Selon une configuration visible sur les figures 5 et 6, au moins un accessoire 66' indissociable du cœur de réacteur 40 est fixé sur ce dernier.

Selon l'invention, un nombre maximal d'accessoires 66 sont reliés à la structure porteuse 48 afin de réduire le nombre d'accessoires 66' supportés par le cœur de réacteur 40.

Cette solution permet d'optimiser la répartition des masses en réduisant la masse des accessoires 66 supportés par la motorisation 32.

Quel que soit le mode de réalisation, la structure porteuse 48 (qu'elle soit pleine, ajourée ou en treillis) permet d'assurer un transfert des charges entre la motorisation 32 et la structure primaire 42 du mât, les efforts étant repris au niveau d'une même partie de la motorisation 32, à savoir le carter de soufflante 38.1.

Le fait que la structure porteuse 48 soit une structure en treillis permet d'obtenir une structure ajourée qui facilite l'accès au cœur de réacteur 40, notamment pour des opérations de maintenance ou de réparation. Enfin, le fait de prévoir une structure en treillis permet de réduire la masse et d'obtenir une structure rigide qui présente une raideur importante dans toutes les directions.

Bien entendu, l'invention n'est pas limitée aux motorisations qui comprennent une soufflante positionnée dans un carter de soufflante. Ainsi, elle peut s'appliquer à toute motorisation qui s'étend d'avant en arrière selon une direction longitudinale et comprend une partie avant ainsi qu'une partie arrière reliée à la partie avant et décalée vers l'arrière selon la direction longitudinale par rapport à la partie avant. La partie arrière peut être une partie du cœur de réacteur d'un turboréacteur ou d'un turbopropulseur. Selon les applications, la partie avant peut être un carter de soufflante 38.1 dans le cas d'une soufflante carénée. La partie avant peut également être une structure support sur laquelle est rapportée une soufflante ou une hélice non carénée ou toute autre structure d'une motorisation 32 positionnée à l'avant de cette dernière et configurée pour former un chemin d'efforts pour les efforts de poussée générés lors de l'utilisation de la motorisation 32. Les parties avant et arrière ont chacune une forme circonférentielle et la partie avant présente une section supérieure à celle de la partie arrière de la motorisation 32.

## Revendications

1. Ensemble de propulsion (30) d'aéronef comprenant :
- une motorisation (32) qui s'étend d'avant en arrière selon un axe longitudinal (X) et comprend, à l'avant, une partie avant et, à l'arrière de la partie avant, une partie arrière, les parties avant et arrière ayant chacune une forme circonférentielle, la partie avant ayant une section supérieure à celle de la partie arrière,
- une nacelle (33) positionnée autour de la motorisation (32),
- une structure primaire (42) de mât (34),
- au moins un accessoire (66),
- un système d'attache-moteur (46), reliant la structure primaire (42) et la motorisation (32), qui comporte au moins une attache avant (46.1) reliant directement la partie avant de la motorisation (32) et la structure primaire (42) ;
**caractérisé en ce que** l'ensemble de propulsion (30) comprend au moins une structure porteuse (48) tubulaire qui s'étend selon un axe parallèle à l'axe longitudinal (X) entre la nacelle (33) et la partie arrière de la motorisation (32), tout autour de la partie arrière de la motorisation (32), la structure porteuse étant reliée à la partie avant de la motorisation (32), **en ce que** le système d'attache-moteur (46) comprend au moins une attache arrière (46.2), décalée vers l'arrière par rapport à l'attache avant (46.1), reliant la structure primaire (42) et la structure porteuse (48) et **en ce qu'**au moins un accessoire (66) est relié à la structure porteuse (48).

2. Ensemble de propulsion (30) selon la revendication précédente, **caractérisé en ce que** l'ensemble de propulsion comprend au moins une liaison (68) assurant un transfert d'énergie mécanique, électrique ou fluidique entre ledit au moins un accessoire (66) et la motorisation (32) et comprenant des premier et deuxième tronçons (68.1, 68.2) reliés respectivement au dit au moins un accessoire (66) et à la motorisation (32) ainsi qu'au moins une connectique (68.3) configurée pour connecter et déconnecter les premier et deuxième tronçons (68.1, 68.2).

3. Ensemble de propulsion (30) selon l'une des revendications précédentes, **caractérisé en ce que** l'attache avant (46.1) et la structure porteuse (48) sont reliées à la motorisation (32) au niveau approximativement d'un même plan transversal d'attache (PTA).

4. Ensemble de propulsion (30) selon l'une des revendications précédentes, **caractérisé en ce que** la structure porteuse (48) est une structure en treillis et comprend des renforts longilignes (50) délimitant des mailles.

5. Ensemble de propulsion (30) selon la revendication précédente, **caractérisé en ce que** la structure porteuse (48) s'étend entre des extrémités avant et arrière (48.1, 48.2), l'extrémité avant (48.1) étant reliée à la motorisation (32), la structure porteuse (48) en treillis comprenant au moins un renfort transversal (52) situé au niveau de l'extrémité arrière (48.2).

6. Ensemble de propulsion (30) selon la revendication précédente, **caractérisé en ce qu'**au moins un renfort transversal (52, 52') s'étend sur toute la circonférence de la partie arrière de la motorisation (32) de manière à former un anneau.

7. Ensemble de propulsion (30) selon l'une des revendications précédentes, **caractérisé en ce que** l'attache arrière (46.2) comprend :
- une poutre transversale (58) solidaire de la structure primaire (42),
- au moins une première manille à deux points (60), positionnée d'un premier côté d'un plan médian vertical (PMV), reliée à la poutre transversale (58) par un premier axe de pivotement (60.1) et à la structure porteuse (48) par un deuxième axe de pivotement (60.2),
- au moins une deuxième manille à trois points (62), positionnée d'un deuxième côté du plan médian vertical (PMV), reliée à la poutre transversale (58) par des troisième et quatrième axes de pivotement (62.1, 62.2) et à la structure porteuse (48) par un cinquième axe de pivotement (62.3).

8. Ensemble de propulsion (30) selon l'une des revendications précédentes, **caractérisé en ce que** le système d'attache-moteur (46) comprend au moins une liaison de sécurité de type fail-safe (64, 64'), reliant la structure primaire (42) et la structure porteuse (48) ou la partie arrière de la motorisation (32), configurée pour ne pas former un chemin d'efforts lorsque l'attache arrière (46.2) est opérationnelle et former un chemin d'efforts en cas d'endommagement de l'attache arrière (46.2).

9. Ensemble de propulsion (30) selon l'une des revendications précédentes, **caractérisé en ce que** les parties avant et arrière de la motorisation (32) sont respectivement un carter de soufflante (38.1) d'une soufflante carénée et un cœur de réacteur (40).

10. Ensemble de propulsion selon l'une des revendications 1 à 8, **caractérisé en ce que** les parties avant et arrière de la motorisation (32) sont respectivement une structure support sur laquelle est rapportée une soufflante ou une hélice non carénée et un cœur de réacteur (40).

11. Aéronef comprenant au moins un ensemble de propulsion (30) selon l'une des revendications précédentes.
